# EUROPEAN PATENT APPLICATION

(11) **EP 1 504 694 A1**
(43) Date of publication of application: **09.02.2005**
(21) Application number: 03017733.1
(22) Date of filing: 04.08.2003
(51) Int. Cl.: A47B 47/00, A47B 87/02

(54) **Structure assambly assembled without tools**

(71) Applicant: Wang, Chang Chou, Er Lin Town, Chang Hua Hsien (TW)
(72) Inventor: Wang, Chang Chou, Er Lin Town, Chang Hua Hsien (TW)
(74) Representative: Casalonga, Axel

(57) **Abstract**

A structure device includes a number of couplers each having a vertical barrel to receive ends of vertical ducts, and one or more arms extended from the vertical barrel to engage into horizontal conduits. Each of the horizontal conduits includes one or more ears engaged into lock notches via channels of the arms, when the horizontal conduits are rotated relative to the arms, so as to couple the horizontal conduits and the vertical ducts without additional fasteners or tools. One or more covers may have two angle members attached to two corner portions and rotatably engaged into the arms with axles, to rotatably secure the cover to the couplers.

## Description

### BACKGROUND OF THE INVENTION

### 1. Field of the Invention

The present invention relates to a structure combination or assembly, and more particularly to a structure assembly having a number of parts or elements to be secured together without additional fasteners and tools.

### 2. Description of the Prior Art

Various kinds of typical structure assemblies, such as cabinets, tool boxes, room partitions, frameworks, wall assemblies, cases, desks, furniture structures, collapsible containers, etc. comprise a number of parts or elements to be secured or assembled together with fasteners and/or tools.

For example, U.S. Patent No. 3,513,606 to Jones, and U.S. Patent No. 4,638,614 to Wilcox disclose two of the typical structure assemblies which also comprise a number of parts or elements to be secured or assembled together with fasteners or bolts and/or tools. The users thus may have to prepare and purchase the fasteners or the bolts and/or the tools in order to secure or assemble the parts or elements together.

U.S. Patent No. 4,065,220 to Ruga discloses another typical structure assembly which comprises a number of parts or elements to be secured or assembled together without fasteners or bolts and/or tools. However, the parts or elements are simply secured or assembled together with force-fitted engagements, and thus may not be solidly secured or retained together.

The present invention has arisen to mitigate and/or obviate the afore-described disadvantages of the conventional structure assemblies.

### SUMMARY OF THE INVENTION

The primary objective of the present invention is to provide a structure assembly including a number of parts or elements to be secured together without additional fasteners and tools.

In accordance with one aspect of the invention; there is provided a structure assembly comprising a plurality of couplers each including a vertical barrel having a bore formed therein, and a peripheral flange extended into the bore of the vertical barrel to form an aperture in the peripheral flange, the couplers each including a first arm and at least one second arm extended from the vertical barrel respectively, a plurality of vertical ducts each including an end portion engaged into the bores of the vertical barrels of the couplers respectively, and engaged with the peripheral flange of the vertical barrel respectively, a first vertical duct of the vertical ducts including a lock nut disposed in the end portion thereof, and a second vertical duct of the vertical ducts including a fastener disposed therein and extended therefrom and engaged through the aperture of the vertical barrel, to thread with the lock nut of the first vertical duct, and to secure the first vertical duct and the second vertical duct to the vertical barrel respectively, a plurality of horizontal conduits each including a bore formed therein, and an ear extended into the bore of each of the horizontal conduits, and the first arms and the second arms of the couplers each including a shank extended therefrom and engaged into the bore of the horizontal conduits respectively, the shanks each including a channel formed therein, to receive the ear of the horizontal conduits respectively, and the first arms and the second arms each including a lock notch formed therein and communicating with the channel of the shanks, to receive the ear of the horizontal conduits respectively, when the horizontal conduits are rotated relative to the first arms and the second arms respectively. The horizontal conduits and the vertical ducts may thus be easily secured and coupled together with the couplers without additional fasteners or tools.

Each of the shanks includes a second channel formed therein and opposite to the channel thereof, each of the horizontal conduits includes a second ear extended into the bore thereof and engaged into the second channels of the shanks respectively, to further secure the horizontal conduits to the shanks.

Each of the first arms and the second arms of the couplers further includes a second lock notch formed therein and communicating with the second channel of the shanks, to receive the second ear of the horizontal conduits respectively, when the horizontal conduits are rotated relative to the first arms and the second arms respectively.

The fastener includes a head secured in the second vertical duct, and partially extended out of the second vertical duct to extend through the aperture of the vertical ducts, and to thread with the lock nut of the first vertical duct, and to secure the first vertical duct and the second vertical duct to the vertical barrel respectively.

One or more boards each may include four comer portions, and each of the angle members includes a slot formed therein to receive the corner portions of the boards respectively, and the angle members each includes two curved depressions formed in an outer peripheral portion thereof to engage with the vertical ducts and the horizontal conduits respectively, and to retain the board between the vertical ducts and the horizontal conduits.

One or more covers are further provided and each includes two corner portions, and two angle members each includes a space formed therein to receive the corner portions of the cover respectively, each of the first arms and the second arms of the couplers includes a cavity formed therein, and the angle members each includes an axle extended therefrom and rotatably engaged into the cavities of the first arms and the second arms respectively, to rotatably secure the cover to the couplers with the angle members.

Each of the couplers includes a lever laterally extended therefrom, and the structure assembly further includes a plate disposed and supported on the levers of the couplers. Each of the couplers includes a sucker member disposed on the lever to engage with the plate and to retain the plate on the levers. Each of the levers includes an orifice formed therein, the each of the sucker members includes a stud extended therefrom and engaged into the orifices of the levers respectively, to secure the sucker members on the levers respectively.

The plate includes a peripheral skirt extended from an outer peripheral portion thereof, to engage with the horizontal conduits, and to secure and retain the plate between the horizontal conduits.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is a partial exploded view of a structure assembly in accordance with the present invention;
FIG. 2 is an enlarged partial perspective view of the structure assembly;
FIG. 3 is a partial exploded view illustrating one of the corner devices of the structure assembly;
FIG. 4 is another partial exploded view illustrating another corner device of the structure assembly;
FIGS. 5, 6 are partial cross sectional views taken along lines 5-5 and 6-6 of FIG. 1 respectively;
FIG. 7 is a partial plan view of the structure assembly, illustrating the operation of the structure assembly;
FIGS. 8, 9, 10 are partial cross sectional views taken along lines 8-8, 9-9 and 10-10 of FIG. 1 respectively;
FIG. 11 is a partial exploded view of the structure assembly, similar to FIG. 1, illustrating different plate members to be attached or supported on the structure assembly; and
FIG. 12 is a partial cross sectional view taken along lines 12-12 of FIG. 11.

### DETAILED DESCRIPTION OF ILLUSTRATIVE EMBODIMENT

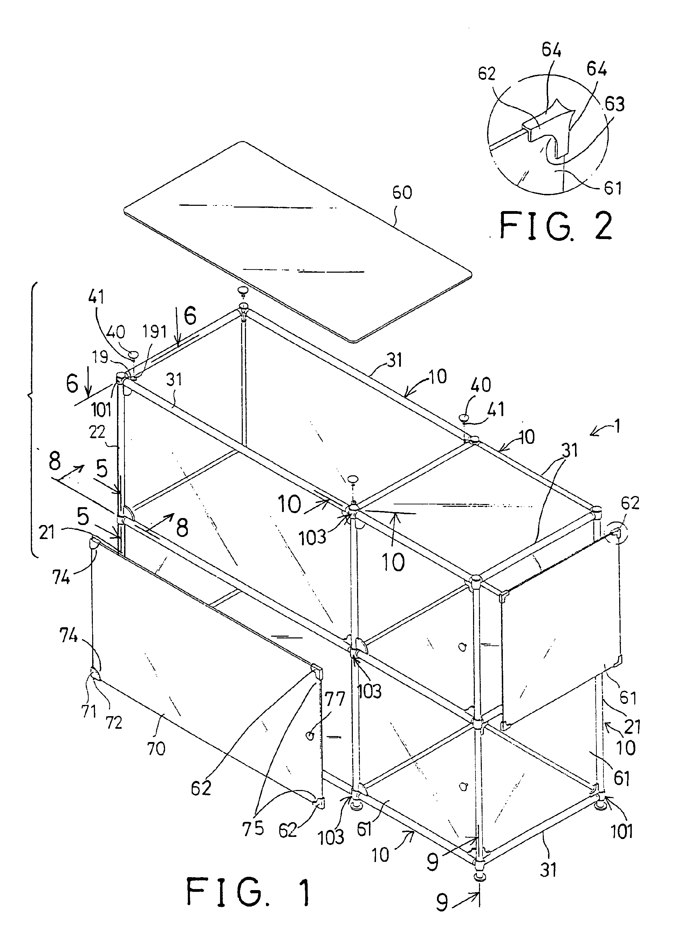

Referring to the drawings, and initially to FIGS. 1-10, a structure assembly in accordance with the present invention comprises a number of erected or vertical ducts 21, 22 and a number of lateral or horizontal conduits 31 to be coupled or assembled together with a number of couplers 101, 103, so as to form a spatial frame device 1 that may include one or more parallelepiped frame units 10 formed therein.

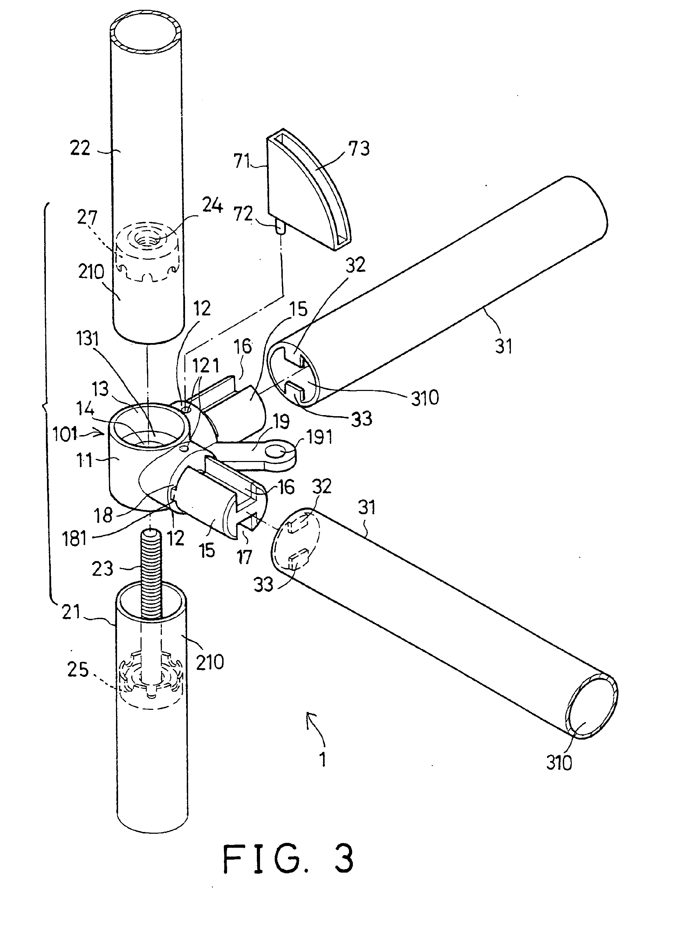

For example, eight of the corner couplers 101 (as shown in FIG. 3) may be arranged in the eight corners of a parallelepiped frame unit 10, to couple four vertical ducts 21 or 22 and eight horizontal conduits 31 together, and to form the parallelepiped frame unit 10.

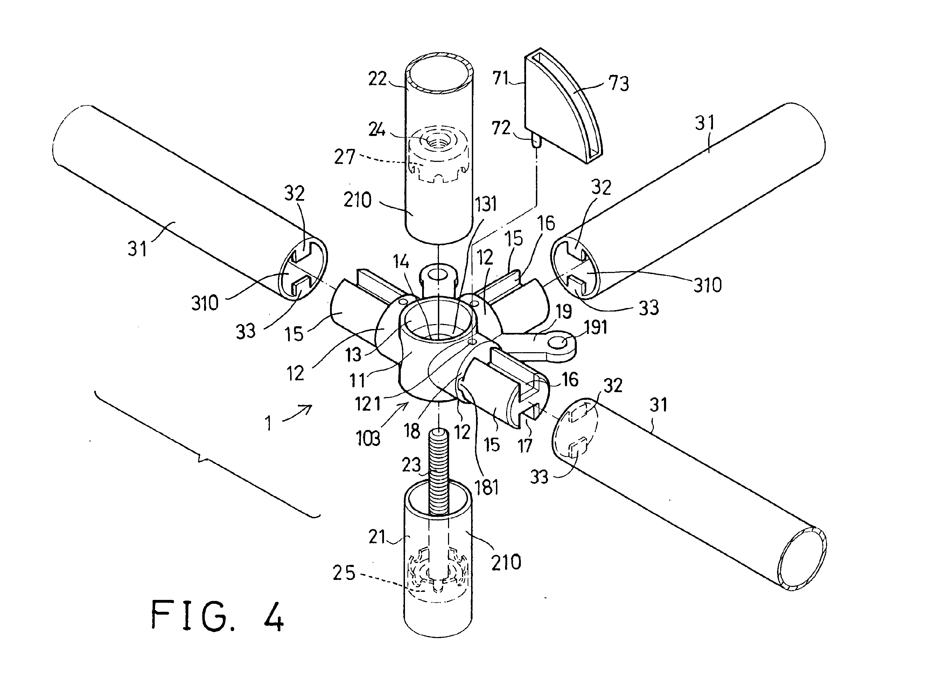

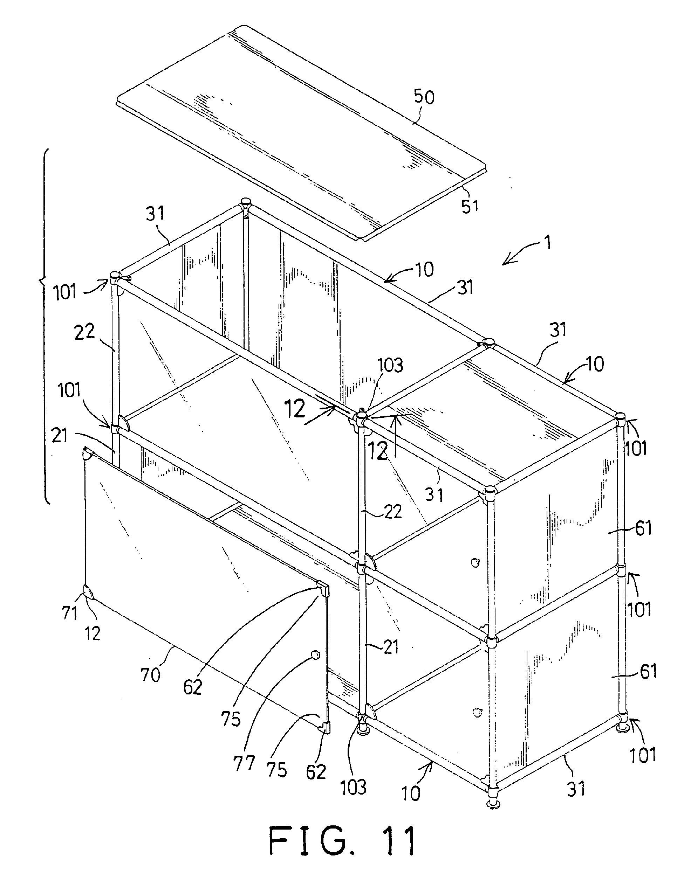

However, when the frame device 1 comprises two or more parallelepiped frame units 10 formed therein, as shown in FIGS. 1, 11, then four or more further couplers 103, such as the intermediate couplers 103 (as shown in FIG. 4) are further required to be provided and coupled between the horizontal conduits 31, in order to form the frame device 1 that includes two or more parallelepiped frame units 10 formed therein.

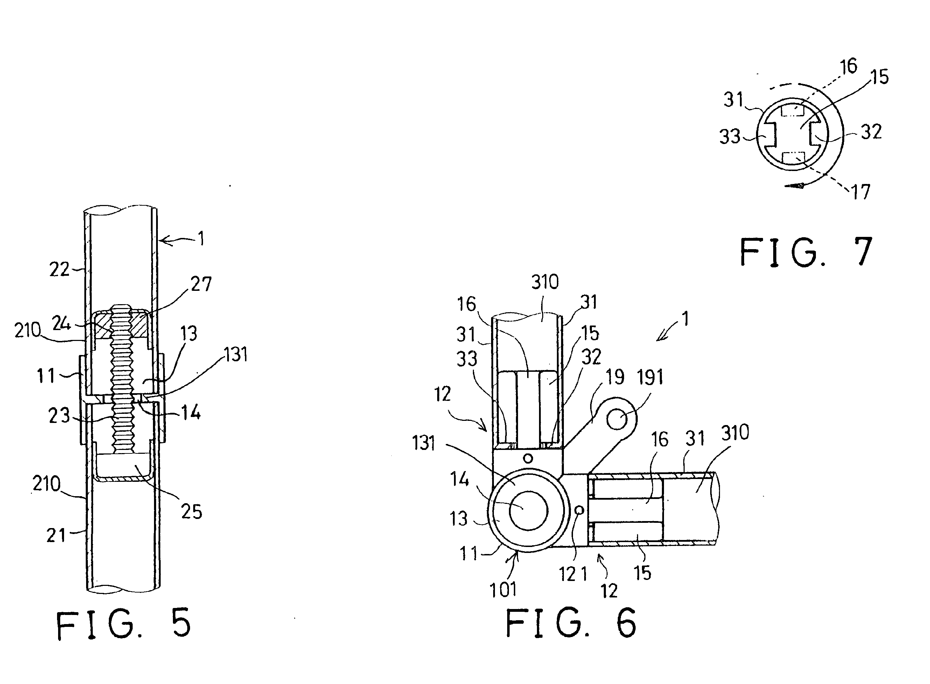

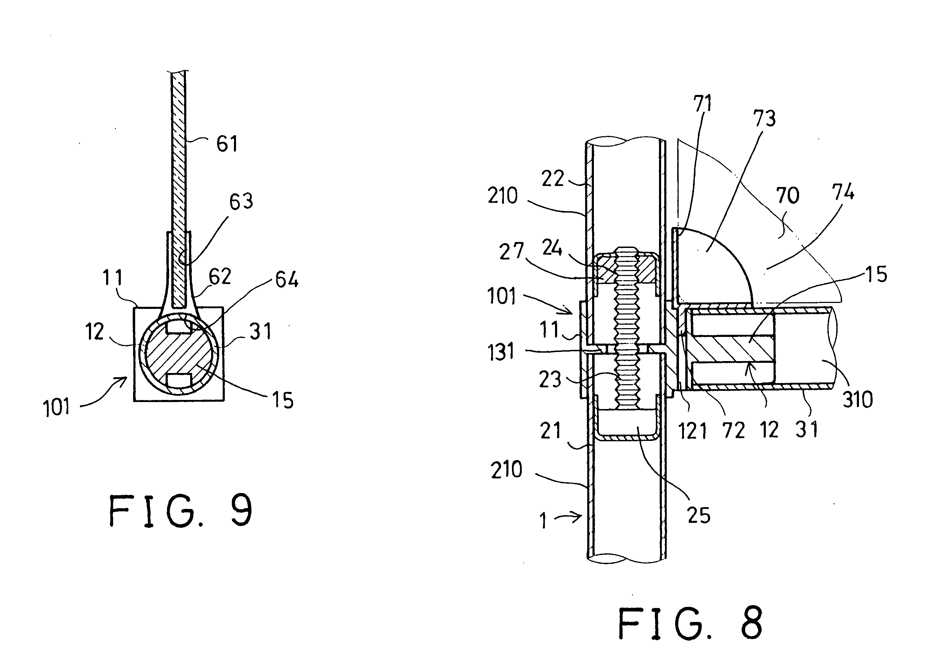

As shown in FIGS. 3, 4, each of the corner couplers 101 and the intermediate couplers 103 includes a vertical barrel 11 having a bore 13 formed therein, and having a peripheral flange 131 extended into the bore 13 thereof to form or define an aperture 14 therein which includes an inner diameter smaller than that of the bore 13 thereof. The bore 13 of the vertical barrel 11 includes an inner diameter slightly greater than, but preferably equals to the outer diameter of the vertical ducts 21, 22, in order to snugly receive the end portions 210 of the vertical ducts 21, 22, best shown in FIGS. 5, 8, and so as to allow the vertical ducts 21, 22 to be solidly coupled together by the vertical barrel 11 of the comer couplers 101 or the intermediate couplers 103.

One of the vertical ducts 21 or 22 includes a fastener 23 secured therein. For example, the fastener 23 includes a head 25 secured in the vertical duct 21, and includes a portion partially extended out of the vertical duct 21, to engage through the aperture 14 of the vertical barrel 11. The other vertical duct 22 includes a screw hole 24 formed therein, such as includes a lock nut 27 secured therein and having the screw hole 24 formed in the lock nut 27, to thread with the fastener 23, and thus to solidly couple the vertical duct 21, 22 to the vertical barrel 11.

Each of the comer couplers 101 and the intermediate couplers 103 includes two or more arms 12 extended outwardly or laterally from the vertical barrel 11. For example, each of the corner couplers 101 includes two arms 12 extended outwardly or laterally from the vertical barrel 11 (FIGS. 1, 3, 6, 11), and each of the intermediate couplers 103 includes three or more arms 12 extended outwardly or laterally from the vertical barrel 11 (FIGS. 1, 4, 11), to couple the horizontal conduits 31 together.

Each of the arms 12 includes a shank 15 extended therefrom and having an outer diameter slightly smaller than, but preferably equals to the inner diameter of the horizontal conduits 31, in order to snugly engage into the end portions or the bores 310 of the horizontal conduits 31, best shown in FIGS. 6, 8, and so as to allow the horizontal conduits 31 to be solidly coupled together by the arms 12 of the corner couplers 101 or the intermediate couplers 103.

Each of the arms 12 includes an outer diameter greater than that of the shank 15, but preferably equals to the outer diameter of the horizontal conduits 31, best shown in FIGS. 6, 8, for allowing the outer portions of the horizontal conduits 31 and the arms 12 to be flush with each other, and to form a smooth outer appearance.

Each of the shanks 15 of the arms 12 includes one or more, such as two opposite channels 16, 17 formed therein. Each of the horizontal conduits 31 includes one or more, such as two opposite ears 32, 33 extended therefrom, to engage into the channels 16, 17 of the shanks 15 respectively, and thus to further solidly secure the horizontal conduits 31 to the shanks 15 of the arms 12 respectively.

It is preferable that each of the ears 32, 33 of the horizontal conduits 31 includes a shape and/or a width and/or a depth and/or a height slightly smaller than, but preferably equals to that of the channels 16, 17 of the shanks 15 respectively, and thus to allow the horizontal conduits 31 to be further solidly secured to the shanks 15 of the arms 12 respectively by the snugly fitting or engagement of the ears 32, 33 in the channels 16, 17 of the shanks 15 respectively.

Each of the arms 12 may further include one or more, such as two opposite lock notches 18 formed therein, such as formed between the arm 12 and the shank 15 respectively, and communicating with the channels 16, 17 of the shanks 15 respectively, so as to form or define a coupling bar 181 between the arm 12 and the shank 15 respectively.

In operation, after the ears 32, 33 of the horizontal conduits 31 have been engaged into the respective channels 16, 17 of the shanks 15, and when the ears 32, 33 of the horizontal conduits 31 are aligned with the lock notches 18 of the arms 12, the ears 32, 33 of the horizontal conduits 31 may be engaged into the lock notches 18 of the arms 12 by rotating the horizontal conduits 31 relative to the arms 12 of the corner couplers 101 or the intermediate couplers 103 respectively (FIG. 7), so as to further solidly secure or couple the horizontal conduits 31 and the shanks 15 of the arms 12 together.

It is also preferable that the ears 32, 33 of the horizontal conduits 31 includes a thickness slightly smaller than, but preferably equals to the depth of the lock notches 18 of the arms 12 respectively, and thus to allow the horizontal conduits 31 to be further solidly secured to the arms 12 respectively by the snugly fitting or engagement of the ears 32, 33 in the lock notches 18 of the arms 12 respectively. The ears 32, 33 of the horizontal conduits 31 may be engaged with the coupling bar 181 of the arm 12 respectively, in order to limit the rotational movement of the horizontal conduits 31 relative to the arm 12.

Each of the corner couplers 101 and the intermediate couplers 103 may further include one or more levers 19 extended outwardly or laterally from the vertical barrel 11, and preferably arranged or located between the arms 12, to engage with and to support one or more plates 60, such as transparent or semi-transparent upper plates 60 between the horizontal conduits 31 by the levers 19.

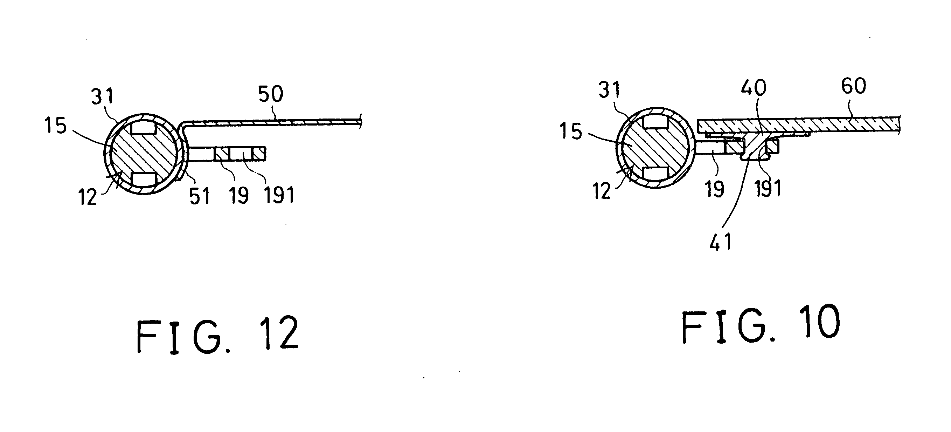

Each of the levers 19 may further include an orifice 191 formed therein to receive a stud 41 of a sucker member 40 therein (FIGS. 1, 10), and to secure or support the sucker members 40 on the levers 19 respectively. The sucker members 40 may further be engaged with the plates 60, so as to further solidly support or retain the plates 60 between the horizontal conduits 31 by the levers 19 and the sucker members 40.

As shown in FIGS. 11, 12, the other plates 50, such as the metal or plastic or wood upper plates 50 may include a curved peripheral flange or skirt 51 extended or provided on the outer peripheral portion thereof, to engage with the horizontal conduits 31, and thus to allow the plates 50 to be secured or retained between the horizontal conduits 31 by the engagement between the curved skirts 51 of the plates 50 and the horizontal conduits 31, without the levers 19 and the sucker members 40.

As shown in FIGS. 1, 2, 9, the other glass or metal or plastic or wood side boards 61 may have four angle members 62 attached to the four corners thereof. For example, each of the angle members 62 may include a slot 63 formed therein to receive the corner portion of the boards 61, and may include two curved depressions 64 formed in the outer peripheral portion thereof to engage with the corresponding curved outer peripheral portions of the vertical ducts 21, 22 and the horizontal conduits 31, and thus for allowing the boards 61 to be secured and retained between the vertical ducts 21, 22 and the horizontal conduits 31 without fasteners or tools.

Referring again to FIGS. 1, 3, 4, 6, 8 and 11, each of the arms 12 may include one or more, such as two opposite cavities 121 formed in the upper and/or the lower portion thereof. The other angle members 71 may each include an axle 72 extended therefrom and rotatably engaged into the respective cavities 121 of the arms 12 respectively, and may each include a space 73 formed therein, to receive the corner portions 74 of a cover 70, and thus to rotatably secure the cover 70 to the corner couplers 101 and/or the intermediate couplers 103, and thus for allowing the cover 70 to be rotatably attached to the frame units 10 respectively.

Two of the angle members 62 may further be provided and engaged onto the other corner portions 75 of the cover 70 that are not pivotally or rotatably secured to the respective frame units 10 and that may be secured or retained between the vertical ducts 21, 22 and the horizontal conduits 31 by the angle members 62. A knob 77 may be attached to the cover 70 and arranged or located between the other corner portions 75 of the cover 70, in order to open and close the cover 70 relative to the frame units 10.

While forming or assembling the frame units 10 of the spatial frame device 1, the vertical ducts 21, 22 and the horizontal conduits 31 and the vertical barrel 11 are first assembled together by the corner couplers 101 and the intermediate couplers 103. The upper plates 50 or 60 may then be secured onto the horizontal conduits 31 either by the skirts 51 of the plates 50 or by the levers 19 and/or the sucker members 40. The side boards 61 may then be attached or retained between the vertical ducts 21, 22 and the horizontal conduits 31 by the angle members 62. The covers 70 may then be pivotally or rotatably attached to the comer couplers 101 and/or the intermediate couplers 103 by the other angle members 71.

Accordingly, the structure assembly in accordance with the present invention includes a number of parts or elements to be secured together without additional fasteners and tools.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. A structure assembly comprising:
a plurality of couplers each including a vertical barrel having a bore formed therein, and a peripheral flange extended into said bore of said vertical barrel to form an aperture in said peripheral flange,
said couplers each including a first arm and at least one second arm extended from said vertical barrel respectively,
a plurality of vertical ducts each including an end portion engaged into said bores of said vertical barrels of said couplers respectively, and engaged with said peripheral flange of said vertical barrel respectively,
a first vertical duct of said vertical ducts including a lock nut disposed in said end portion thereof, and a second vertical duct of said vertical ducts including a fastener disposed therein and extended therefrom and engaged through said aperture of said vertical barrel, to thread with said lock nut of said first vertical duct, and to secure said first vertical duct and said second vertical duct to said vertical barrel respectively,
a plurality of horizontal conduits each including a bore formed therein, and an ear extended into said bore of each of said horizontal conduits, and
said first arms and said at least one second arms of said couplers each including a shank extended therefrom and engaged into said bore of said horizontal conduits respectively, said shanks each including a channel formed therein, to receive said ear of said horizontal conduits respectively, and said first arms and said at least one second arms each including a lock notch formed therein and communicating with said channel of said shanks, to receive said ear of said horizontal conduits respectively, when said horizontal conduits are rotated relative to said first arms and said at least one second arms respectively,
said horizontal conduits and said vertical ducts being secured and coupled together with said couplers without additional fasteners or tools.

2. The structure assembly as claimed in claim 1, wherein each of said shanks includes a second channel formed therein and opposite to said channel thereof, each of said horizontal conduits includes a second ear extended into said bore thereof and engaged into said second channels of said shanks respectively, to further secure said horizontal conduits to said shanks.

3. The structure assembly as claimed in claim 2, wherein each of said first arms and said at least one second arms of said couplers further includes a second lock notch formed therein and communicating with said second channel of said shanks, to receive said second ear of said horizontal conduits respectively, when said horizontal conduits are rotated relative to said first arms and said at least one second arms respectively.

4. The structure assembly as claimed in claim 1, wherein said fastener includes a head secured in said second vertical duct, and said fastener is partially extended out of said second vertical duct to extend through said aperture of said vertical ducts, and to thread with said lock nut of said first vertical duct, and to secure said first vertical duct and said second vertical duct to said vertical barrel respectively.

5. The structure assembly as claimed in claim 1 further comprising at least one board including four corner portions, and four angle members each including a slot formed therein to receive said corner portions of said boards respectively, and said angle members each including two curved depressions formed in an outer peripheral portion thereof to engage with said vertical ducts and said horizontal conduits respectively, and to retain said at least one board between said vertical ducts and said horizontal conduits.

6. The structure assembly as claimed in claim 1 further comprising a cover including two comer portions, and two angle members each including a space formed therein to receive said corner portions of said cover respectively, each of said first arms and said at least one second arms of said couplers including a cavity formed therein, and said angle members each including an axle extended therefrom and rotatably engaged into said cavities of said first arms and said at least one second arms respectively, to rotatably secure said cover to said couplers with said angle members.

7. The structure assembly as claimed in claim 1, wherein each of said couplers includes a lever laterally extended therefrom, and said structure assembly further includes a plate disposed and supported on said levers of said couplers.

8. The structure assembly as claimed in claim 7, wherein each of said couplers includes a sucker member disposed on said lever to engage with said plate and to retain said plate on said levers.

9. The structure assembly as claimed in claim 8, wherein each of said levers includes an orifice formed therein, said each of said sucker members includes a stud extended therefrom and engaged into said orifices of said levers respectively, to secure said sucker members on said levers respectively.

10. The structure assembly as claimed in claim 7, wherein said plate includes a peripheral skirt extended from an outer peripheral portion thereof, to engage with said horizontal conduits, and to secure and retain said plate between said horizontal conduits.
